(19) Europäisches Patentamt / European Patent Office / Office européen des brevets

(11) **EP 4 755 776 A1**

(12) **EUROPEAN PATENT APPLICATION**
published in accordance with Art. 153(4) EPC

(43) Date of publication:
**10.06.2026 Bulletin 2026/24**

(21) Application number: **24849136.7**

(22) Date of filing: **29.07.2024**

(51) International Patent Classification (IPC):
**B62K 21/00** *(2006.01)* **B62J 45/00** *(2020.01)*
**B62J 45/414** *(2020.01)* **B62J 45/415** *(2020.01)*
**B62K 17/00** *(2006.01)*

(52) Cooperative Patent Classification (CPC):
**B62J 45/00; B62J 45/414; B62J 45/415;
B62K 17/00; B62K 21/00**

(86) International application number:
**PCT/JP2024/026966**

(87) International publication number:
**WO 2025/028485 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.07.2023 JP 2023124109**

(71) Applicant: **Astemo, Ltd.**
**Chiyoda-ku,**
**Tokyo 1000004 (JP)**

(72) Inventor: **SUZUKI Keita**
**Hitachinaka-shi, Ibaraki 312-8503 (JP)**

(74) Representative: **Weickmann & Weickmann
PartmbB**
**Postfach 860 820**
**81635 München (DE)**

(54) **VEHICLE CONTROL DEVICE AND STEERING ANGLE CALCULATION METHOD**

(57) A geometrical calculation unit (1) calculates a traveling direction angle of a vehicle from a yaw angular speed of a gravitational direction axis calculated from a yaw angular speed $\omega_y$ measured by an IMU(300) and a vehicle speed V. Further, a steering angle $\delta_H$ is calculated using the traveling direction angle and a roll angle $\varphi$. Further, the geometrical calculation unit (1) preferably calculates the traveling direction angle based on a height of the IMU(300) from a road surface. According to such a configuration, the steering angle $\delta_H$ can be calculated without using a steering angle sensor, and a configuration of a control system can be simplified.

[FIG. 1]

EP 4 755 776 A1

**Description**

Technical Field

The present invention relates to a vehicle control device and a steering angle calculation method.

Background Art

In recent years, technical development related to posture control of a vehicle such as a two-wheel vehicle is advanced, and related inventions have also been published. For example, PTL 1 discloses a steering control device that obtains a steering angle from a yaw acceleration, a slip angle, and a vehicle speed for a four-wheel vehicle that travels and follows a target route.

Citation List

Patent Literature

PTL 1: JP2022-112301A

Summary of Invention

Technical Problem

However, in case of a two-wheel vehicle, since the steering angle is influenced by a roll angle during turning, there is room for improvement in calculation of the steering angle.
In view of such circumstances, an object of the invention is to improve performance of calculation of a steering angle of a vehicle.

Solution to Problem

The invention for solving the above-described problem is a vehicle control device which includes a geometrical calculation unit configured to calculate a traveling direction angle of a vehicle from a yaw angular speed of a gravity direction axis and a wheel speed, and calculate a steering angle using the traveling direction angle and a roll angle.

Advantageous Effects of Invention

According to the invention, it is possible to improve performance of calculation of a steering angle of a vehicle.

Brief Description of Drawings

[FIG. 1] FIG. 1 is a functional configuration diagram of a vehicle control device according to the present embodiment.
[FIG. 2] FIG. 2 is an explanatory diagram related to calculation of a static roll angle.
[FIG. 3] FIG. 3 is an explanatory diagram related to a change in static roll angle depending on a riding posture.
[FIG. 4] FIG. 4 is an explanatory diagram related to calculation of a dynamic roll angle.
[FIG. 5] FIG. 5 is an explanatory graph showing a change in upper-lower acceleration during wheelie traveling.
[FIG. 6] FIG. 6 is an explanatory diagram showing a riding posture map.

Description of Embodiments

Hereinafter, an embodiment of the invention will be described in detail with reference to the drawings as appropriate. Each drawing is merely schematically shown to the extent that the invention can be sufficiently understood. Therefore, the invention is not limited to the shown examples. In the drawings, common components or similar components are denoted by the same reference numerals, and redundant description thereof will be omitted.
In the present embodiment, a two-wheel vehicle will be described as an example of the vehicle.
For convenience of description, a traveling direction of a two-wheel vehicle is defined as "front", and "rear", "left-right" (lateral), "upper", and "lower" (gravity direction) are defined.

[Configuration]

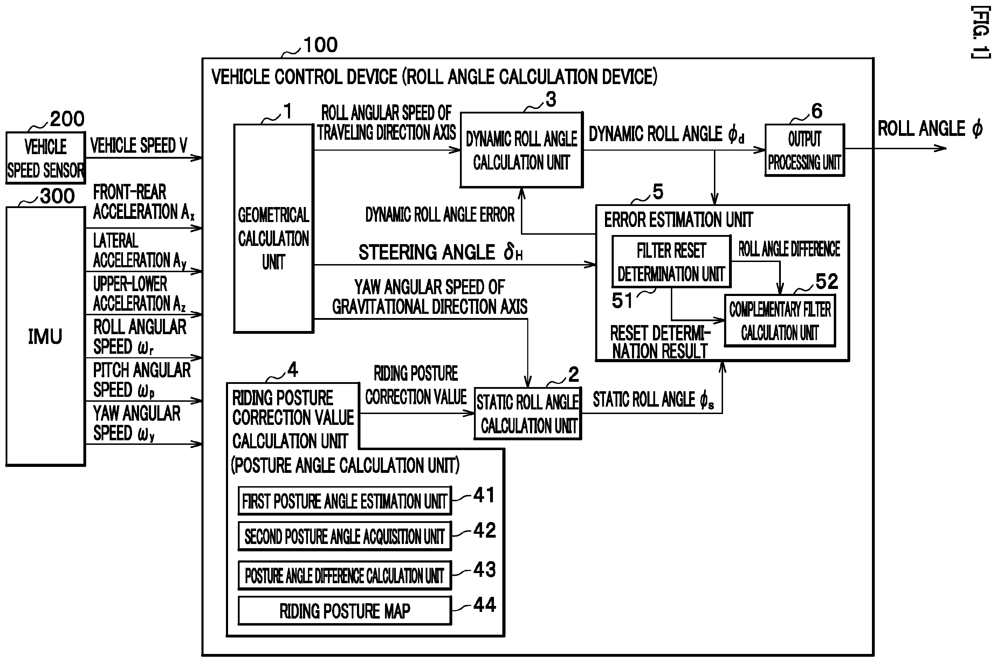

FIG. 1 is a functional configuration diagram of a vehicle control device according to the present embodiment. A vehicle control device 100 is mounted on a two-wheel vehicle (handlebar vehicle). The vehicle control device 100 is a computer that performs calculation related to posture control of the two-wheel vehicle. In particular, the vehicle control device 100 functions as a roll angle calculation device that calculates a roll angle of a turning two-wheel vehicle. The vehicle control device 100 includes hardware such as an input unit, an output unit, a controller, and a storage unit. For example, when the controller is implemented by a central processing unit (CPU), information processing by a computer including the controller is implemented by program execution processing by the CPU. In addition, the storage unit included in the computer stores various programs for implementing functions of the computer according to instructions of the CPU. Accordingly, cooperation between software and hardware is implemented.

The vehicle control device 100 is communicably connected to a vehicle speed sensor 200 and an inertial measurement unit (IMU) 300. The vehicle speed sensor 200 detects a vehicle speed V of the two-wheel vehicle. For example, the vehicle speed sensor 200 is attached to a wheel of a two-wheel vehicle, and can detect the vehicle speed V based on a wheel speed obtained by counting the number of rotations of the wheel per unit time. The vehicle speed sensor is generally provided on a front wheel and a rear wheel of the wheels, or on the front wheel or the rear wheel, but in the present embodiment, the vehicle speed sensor is described as being provided on at least one wheel. The vehicle speed V from the vehicle speed sensor 200 is input to the vehicle control device 100. The IMU 300 is, for example, a six-axial IMU, and detects (measures) a front-rear acceleration $A_x$, a lateral acceleration $A_y$, an upper-lower acceleration $A_z$, a roll angular speed $\omega_r$, a pitch angular speed $\omega_p$, and a yaw angular speed $\omega_y$ of the two-wheel vehicle. The front-rear acceleration $A_x$, the lateral acceleration $A_y$, the upper-lower acceleration $A_z$, the roll angular speed $\omega_r$, the pitch angular speed $\omega_p$, and the yaw angular speed $\omega_y$ from the IMU 300 are input to the vehicle control device 100. The front-rear acceleration $A_x$, the lateral acceleration $A_y$, the upper-lower acceleration $A_z$, the roll angular speed $\omega_r$, the pitch angular speed $\omega_p$, and the yaw angular speed $\omega_y$ received from the IMU 300 to the vehicle control device 100 are values obtained by converting an output of a sensor axis output from the IMU 300 into a vehicle axis. For example, when the vehicle is inclined, a direction of the upper-lower acceleration $A_z$ is not the gravity direction but a direction inclined with respect to the gravity direction.

The vehicle control device 100 includes a geometrical calculation unit 1, a static roll angle calculation unit 2 (first roll angle calculation unit), a dynamic roll angle calculation unit 3 (second roll angle calculation unit), a riding posture correction value calculation unit 4 (posture angle calculation unit), an error estimation unit 5 (roll angle error estimation unit), and an output processing unit 6.

The geometrical calculation unit 1 outputs a value used for calculation of vehicle control based on geometrical information indicating a shape of the two-wheel vehicle and a posture of the two-wheel vehicle.

The static roll angle calculation unit 2 calculates a static roll angle $\varphi_s$ of the two-wheel vehicle. The static roll angle $\varphi_s$ is a roll angle without depending on time.

The dynamic roll angle calculation unit 3 calculates a dynamic roll angle $\varphi_d$ of the two-wheel vehicle. The dynamic roll angle $\varphi_d$ is a roll angle depending on time. The dynamic roll angle $\varphi_d$ can be calculated by integrating the roll angular speed $\omega_r$ with time. On the other hand, the static roll angle $\varphi_s$ can be obtained by calculation without integrating the roll angular speed $\omega_r$ with time.

The riding posture correction value calculation unit 4 calculates a correction value caused by a riding posture of the two-wheel vehicle as a riding posture correction value. The riding posture correction value can be used to correct the static roll angle $\varphi_s$. The riding posture correction value calculation unit 4 can also calculate the riding posture of the two-wheel vehicle.

The error estimation unit 5 estimates an error included in the dynamic roll angle $\varphi_d$ calculated by the dynamic roll angle calculation unit 3 as a dynamic roll angle error.

The output processing unit 6 outputs the dynamic roll angle $\varphi_d$ from which an influence of the error is removed as a roll angle $\varphi$ of the two-wheel vehicle.

[Estimation of Dynamic Roll Angle Error]

As shown in FIG. 1, the error estimation unit 5 includes a filter reset determination unit 51 (special traveling determination unit, traveling determination unit) and a complementary filter calculation unit 52 (roll angle error estimation unit). The filter reset determination unit 51 determines whether or not to perform calculation by the complementary filter calculation unit 52 according to a traveling state of the two-wheel vehicle. The complementary filter calculation unit 52 estimates calculation errors included in the static roll angle $\varphi_s$ and the dynamic roll angle $\varphi_d$ by a Kalman filter. The Kalman filter is a calculation method for estimating an internal state from observed values (including errors and noise) acquired by sensors (the vehicle speed sensor 200 and the IMU 300 in the present embodiment). For example, the filter reset determination unit 51 can function as a calculation unit that calculates a value to be input to the complementary filter calculation unit 52, but is not limited thereto. In the present embodiment, the description will be continued assuming that the filter reset determination unit 51 is such a calculation unit.

The static roll angle $\varphi_s$ calculated by the static roll angle calculation unit 2 and the dynamic roll angle $\varphi_d$ calculated by the dynamic roll angle calculation unit 3 are input to the filter reset determination unit 51. The filter reset determination unit 51 calculates a difference between the static roll angle $\varphi_s$ and the dynamic roll angle $\varphi_d$, and outputs the difference as a roll angle difference. The roll angle difference is input to the complementary filter calculation unit 52. The complementary filter calculation unit 52 can estimate a calculation error included in the roll angle difference by the Kalman filter. The calculation error included in the roll angle difference is a combination of the calculation error included in the static roll angle $\varphi_s$ and the calculation error included in the dynamic roll angle $\varphi_d$. The complementary filter calculation unit 52 can estimate the calculation error included in the static roll angle $\varphi_s$ and the calculation error included in the dynamic roll angle $\varphi_d$ from the calculation error included in the roll angle difference, respectively. In the present embodiment, the complementary filter calculation unit 52 estimates the calculation error included in the dynamic roll angle $\varphi_d$ based on the roll angle difference between the static roll angle $\varphi_s$ and the dynamic roll angle $\varphi_d$, and outputs the calculation error to the dynamic roll angle calculation unit 3 as the dynamic roll angle error.

The dynamic roll angle calculation unit 3 can calculate the dynamic roll angle $\varphi_d$ using the dynamic roll angle error output from the complementary filter calculation unit 52 of the error estimation unit 5, and the dynamic roll angle $\varphi_d$ from which the dynamic roll angle error is removed is obtained. The obtained dynamic roll angle $\varphi_d$ is input to the output processing unit 6. The output processing unit 6 can output the dynamic roll angle $\varphi_d$ from which the influence of the error is removed as the roll angle $\varphi$ of the two-wheel vehicle. The obtained dynamic roll angle $\varphi_d$ is input to the error estimation unit 5, and can be used for estimation by the complementary filter calculation unit 52. As a result, it is possible to repeatedly estimate the calculation error for the dynamic roll angle $\varphi_d$. For example, the complementary filter calculation unit 52 can output the dynamic roll angle error in which estimation accuracy is improved to a certain level or higher to the dynamic roll angle calculation unit 3.

When a sensor error of the IMU is estimated by the Kalman filter in order to calculate the roll angle of the two-wheel vehicle, in the related art, it is necessary to perform four arithmetic operations using a matrix of $5 \times 5$ in which five types of observed values (roll acceleration, roll angular speed, yaw acceleration, yaw angular speed, and front-rear acceleration) output by the IMU are input, and there is a problem that a calculation load is very large. According to the present embodiment, input values used for estimation by the Kalman filter are only two types, that is, the static roll angle $\varphi_s$ and the dynamic roll angle $\varphi_d$. Therefore, the calculation performed in the sensor error estimation of the IMU 300 is four arithmetic operations using a matrix of $2 \times 2$, and the calculation load caused by the matrix calculation can be minimized. As a result, the calculation load for calculating the roll angle of the two-wheel vehicle can be reduced.

Note, it is preferable to appropriately adjust the calculation and control performed by the vehicle control device 100 in order to set accuracy of the roll angle $\varphi$ of the two-wheel vehicle to be finally calculated to a certain level or higher while reducing an amount of calculation associated with the error estimation by the Kalman filter. Hereinafter, a method of such adjustment will be described.

[Details of Calculation of Static Roll Angle $\varphi_s$]

The static roll angle $\varphi_s$ can be calculated by the following Formula (1).

[Math. 1]

$$\phi_S = \arctan\left(\frac{\frac{V^2}{R}}{g}\right) m_\phi$$

Formula (1)

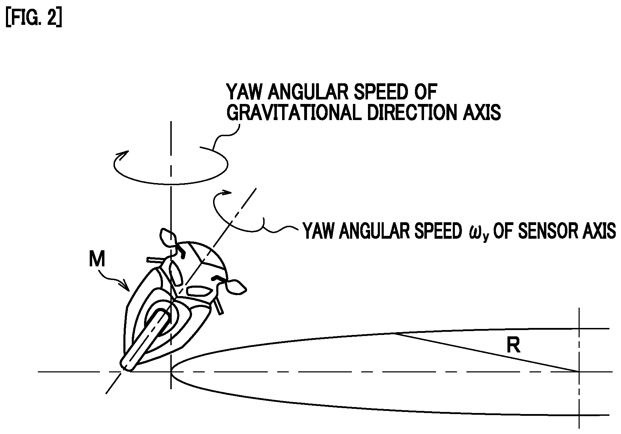

Here, R is a turning radius of the two-wheel vehicle during turning. g is a gravitational acceleration. $m_\varphi$ is a geometrical bank angle conversion coefficient, and is a constant uniquely obtained from the shape and posture of the two-wheel vehicle. $(V^2/R)$ in Formula (1) is a centripetal acceleration, and is directed to a turning center. g is the gravity direction. That is, according to Formula (1), the static roll angle $\varphi_s$ is expressed by using an arctangent of $(V^2/R)$ in a turning center direction and g in the gravity direction. Since the vehicle speed V can be acquired and g and $m_\varphi$ are known, it is necessary to obtain the turning radius R in order to obtain the static roll angle $\varphi_s$. FIG. 2 is an explanatory diagram related to calculation of the static roll angle. In order to obtain the turning radius R (radius of virtual steady circle), it is necessary to use the yaw angular speed of a gravitational direction axis) instead of the yaw angular speed $\omega_y$ of the vehicle axis detected by the IMU 300 (not shown in FIG. 2) mounted on a two-wheel vehicle M during turning (the yaw angular speed of a horizontal direction axis does not contribute to turning). The geometrical calculation unit 1 can calculate the yaw angular speed of the gravitational direction axis by performing coordinate conversion such that the yaw angular speed $\omega_y$ of the vehicle axis rotates by a bank angle of the two-wheel vehicle M. The bank angle is the roll angle $\varphi$, and more accurately, is a previous value of the static roll angle. The calculated yaw angular speed of the gravitational direction axis is input to the static roll angle calculation unit 2. The previous value of the roll angle $\varphi$ (the roll angle $\varphi$ finally output by the output processing unit 6) can also be used.

The static roll angle calculation unit 2 can calculate the static roll angle $\varphi_s$ (provisional first roll angle) using Formula (1). At this time, the yaw angular speed of the gravitational direction axis calculated using the pitch angular speed $\omega_p$ measured by the IMU 300 may be used.

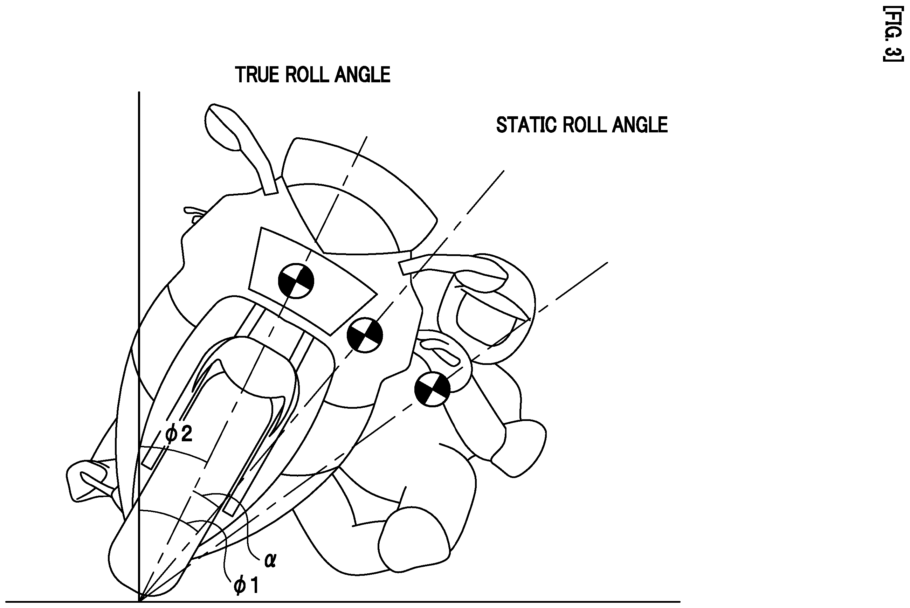

Further, the yaw angular speed $\omega_y$ changes depending on the riding posture. The riding posture is, for example, lean-in or lean-out of an occupant. The riding posture also includes a meaning of a posture of a moving vehicle in consideration of not only an occupant riding on the two-wheel vehicle but also a load including a package loaded on the two-wheel vehicle. FIG. 3 is an explanatory diagram related to a change in static roll angle depending on the riding posture. In a case of lean-with, the static roll angle of the two-wheel vehicle M indicates a true roll angle $\varphi2$ obtained based on a center of gravity of the vehicle. As shown in FIG. 3, in a case of lean-in, the static roll angle of the two-wheel vehicle M increases, and indicates a static roll angle $\varphi1$ obtained based on a center of gravity generated by the riding posture. In other words, even if an inclination (bank angle) of the two-wheel vehicle M is the same, a turning radius during lean-in is smaller than a turning radius during lean-with. Therefore, the yaw angular speed $\omega_y$ increases when the riding posture becomes lean-in. As a result, the static roll angle increases when the riding posture becomes lean-in.

In view of the above, if an influence due to the riding posture can be estimated, a change in yaw angular speed $\omega_y$ can be calculated, and thus the static roll angle $\varphi_s$ can be corrected. The influence due to the riding posture can be estimated by using a change in lateral acceleration $A_y$ and a change in upper-lower acceleration $A_z$ measured by the IMU 300 (details will be described later). As shown in FIG. 1, the riding posture correction value calculation unit 4 includes a first posture angle estimation unit 41, a second posture angle acquisition unit 42, a posture angle difference calculation unit 43, and a riding posture map 44.

The first posture angle estimation unit 41 estimates a first posture angle $\varphi1$ obtained based on the center of gravity generated by the riding posture. The first posture angle $\varphi1$ is an angle obtained from the lateral acceleration $A_y$ acting in a lateral direction of the two-wheel vehicle and the upper-lower acceleration $A_z$ acting in the gravity direction of the two-wheel vehicle.

The second posture angle acquisition unit 42 acquires a second posture angle $\varphi2$ obtained based on the center of gravity of the vehicle.

The posture angle difference calculation unit 43 calculates a difference $\alpha$ (see FIG. 3) between the first posture angle $\varphi1$ and the second posture angle $\varphi2$.

The riding posture map 44 is a map used to acquire the second posture angle $\varphi2$. The riding posture map 44 is a map created based on the roll angle $\varphi$ acting on the center of gravity of the two-wheel vehicle M, the lateral acceleration $A_y$ acting in the lateral direction of the two-wheel vehicle M, and the upper-lower acceleration $A_z$ acting in the gravity direction of the two-wheel vehicle M (details will be described later).

The riding posture correction value calculation unit 4 outputs the difference $\alpha$ to the static roll angle calculation unit 2 as the riding posture correction value. The static roll angle calculation unit 2 can correct the static roll angle $\varphi_s$ (provisional first roll angle) using the riding posture correction value. The static roll angle $\varphi_s$ (confirmed first roll angle) corrected by the riding posture correction value is output to the error estimation unit 5. The riding posture correction value (difference $\alpha$) is a value indicating the influence due to the riding posture itself, and is a value indicating a change amount of the yaw angular speed $\omega_y$. The static roll angle calculation unit 2 can correct the yaw angular speed (see FIG. 2) of the gravitational direction axis received from the geometrical calculation unit 1 with the riding posture correction value. As a result, the static roll angle calculation unit 2 can calculate the static roll angle $\varphi_s$ (confirmed first roll angle) using Formula (1).

Note, a functional unit combining the static roll angle calculation unit 2 and the riding posture correction value calculation unit 4 may be the static roll angle calculation unit 2 (first roll angle calculation unit).

[Details of Calculation of Dynamic Roll Angle $\varphi_d$]

<Traveling Direction Correction>

The dynamic roll angle $\varphi_d$ can be calculated by integrating the roll angular speed $\omega_r$ detected by the IMU 300 with time. An integration section is, for example, a period from a time when the previous value of the roll angle $\varphi$ is output to a time when a current value of the roll angle $\varphi$ is output. In a two-wheel vehicle, a direction of banking changes during turning. That is, an axis of the roll angular speed $\omega_r$ changes. Here, the roll angular speed $\omega_r$ integrated in calculation of the dynamic roll angle $\varphi_d$ is a roll angular speed of a traveling direction axis. Therefore, calculation accuracy of the dynamic roll angle $\varphi_d$ can be improved by obtaining the roll angular speed of the traveling direction axis.

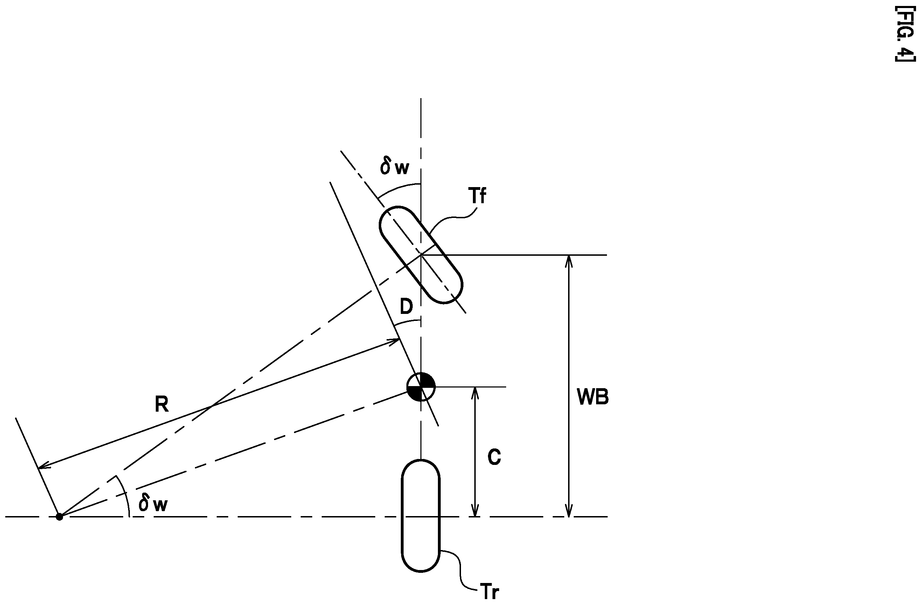

FIG. 4 is an explanatory diagram related to the calculation of the dynamic roll angle. FIG. 4 is a plan view, and shows geometrical information related to the two-wheel vehicle (only a front wheel Tf and a rear wheel Tr are shown) steered without banking. As shown in FIG. 4, a traveling direction angle D is generated with respect to the two-wheel vehicle during turning. The traveling direction angle D is an angle formed by a straight line passing through a center of the front wheel Tf and a center of the rear wheel Tr, with a position of the IMU 300 (not shown in FIG. 4) as a rotation center, and the traveling direction axis of the two-wheel vehicle M during turning. In FIG. 4, R is the turning radius, C is a distance between the position of the IMU 300 (not shown in FIG. 4) and the center of the rear wheel Tr, WB is a distance between the center of the front wheel Tf and the center of the rear wheel Tr, and $\delta_w$ is a steering angle.

According to the geometrical information shown in FIG. 4, the traveling direction angle D is $D = \sin^{-1} (C/R)$. That is, the traveling direction angle D can be calculated from the turning radius R. Note that, $R = V/\omega_y$. $\omega_y$ is the yaw angular speed of the vehicle axis, and preferably uses the yaw angular speed of the gravitational direction axis (see FIG. 2). The roll angular speed of the traveling direction axis can be calculated by performing coordinate conversion such that the roll angular speed $\omega_r$ of the vehicle axis is rotated by the traveling direction angle D. This calculation is performed by the geometrical calculation unit 1. The geometrical calculation unit 1 outputs the calculated roll angular speed of the traveling direction axis to the dynamic roll angle calculation unit 3. The dynamic roll angle calculation unit 3 can calculate the dynamic roll angle $\varphi_d$ by integrating the roll angular speed of the traveling direction axis with time. The dynamic roll angle calculation unit 3 can calculate (feedback and calculate) the dynamic roll angle $\varphi_d$ using the roll angular speed of the traveling direction axis and the dynamic roll angle error output by the error estimation unit 5.

At this time, the dynamic roll angle calculation unit 3 preferably calculates the dynamic roll angle $\varphi_d$ by further using the pitch angular speed $\omega_p$ measured by the IMU 300. This is because, by using the pitch angular speed $\omega_p$, a horizontal direction component of a rotation axis (extending obliquely upward or obliquely downward) of the roll angular speed of the traveling direction axis can be obtained. Since a vertical direction component of the rotation axis of the roll angular speed of the traveling direction axis does not contribute to the dynamic roll angle $\varphi_d$, the calculation accuracy of the dynamic roll angle $\varphi_d$ can be further improved by using the pitch angular speed $\omega_p$ measured by the IMU 300.

<Steering Correction for Estimated Error by Kalman Filter>

During turning (when the steering is turned), that is, when the steering angle is generated, calculation accuracy of the static roll angle $\varphi_s$ is reduced. Therefore, accuracy of the error estimation by the Kalman filter in the complementary filter calculation unit 52 is also reduced. Therefore, in order to set the accuracy of the error estimation to a certain level or higher while reducing the calculation load, an error when the steering angle is generated is preferably adjusted. Specifically, the complementary filter calculation unit 52 preferably adjusts a term related to the error estimated by the Kalman filter by the steering angle. By such adjustment, the error estimation unit 5 can correct the dynamic roll angle error using the steering angle of the two-wheel vehicle. In addition, the dynamic roll angle calculation unit 3 can calculate the dynamic roll angle $\varphi_d$ using the corrected dynamic roll angle error.

<Disabling Kalman Filter During Special Traveling>

Formula (1) used to calculate the static roll angle $\varphi_s$ is not a formula that assumes special traveling such as jumping or wheelie. Therefore, the accuracy of the error estimation by the Kalman filter is low during special traveling. Further, it is preferable that control of an antilock braking system (ABS) or the like is not operated during jumping. In view of such circumstances, it is preferable to disable the Kalman filter during special traveling rather than improving the accuracy of the error estimation during special traveling. By disabling the Kalman filter as described above, both the calculation accuracy and the calculation load necessary for turning ABS control can be achieved.

Specifically, first, the filter reset determination unit 51 shown in FIG. 1 determines whether or not the two-wheel vehicle is in special traveling. The determination as to whether or not the vehicle is in the special traveling will be described later. When the filter reset determination unit 51 determines that the vehicle is not in special traveling, the filter reset determination unit 51 outputs a reset determination result indicating the determination to the complementary filter calculation unit 52. The complementary filter calculation unit 52 enables the Kalman filter according to the reset determination result, and performs the error estimation. On the other hand, when the filter reset determination unit 51 determines that the vehicle is in the special traveling, the filter reset determination unit 51 outputs the reset determination result indicating the determination to the complementary filter calculation unit 52. The complementary filter calculation unit 52 disables the Kalman filter according to the reset determination result, and does not perform the error estimation. In this case, the dynamic roll angle error is not output to the dynamic roll angle calculation unit 3.

[Determination as to Whether or not Vehicle is in Special Traveling]

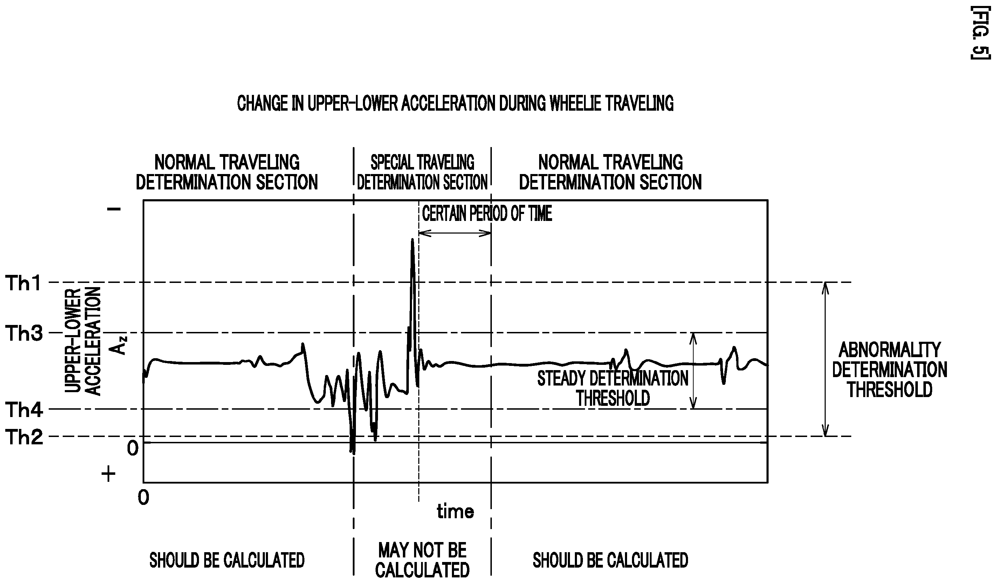

The determination as to whether or not the vehicle is in the special traveling can be implemented by tracking the change in upper-lower acceleration $A_z$. FIG. 5 is a graph showing the change in upper-lower acceleration during wheelie traveling. A horizontal axis of the graph in FIG. 5 represents a time, and a vertical axis represents the upper-lower acceleration ($A_z$). The vertical axis of the graph is positive (+) in a downward direction and negative (-) in an upward direction. As shown in the graph of FIG. 5, the upper-lower acceleration $A_z$ exhibits a large amplitude during wheelie traveling. Therefore, the filter reset determination unit 51 prepares four thresholds Th1 to Th4 for the upper-lower acceleration $A_z$. Th1 to Th4 satisfy a relational expression of Th1 > Th4 > 0 > Th3 > Th2.

The upper-lower acceleration $A_z$ measured by the IMU 300 is input to the filter reset determination unit 51. When a condition (first condition) of $A_z \leq$ Th1 or $A_z \geq$ Th2 is satisfied, the filter reset determination unit 51 determines that the two-wheel vehicle is in the wheelie traveling. At this time, the error estimation by the Kalman filter may not be calculated (is not calculated in the present embodiment). $A_z \geq$ Th2 indicates a time when the wheel is lifted. In addition, $A_z \leq$ Th1 indicates a time when the lifted wheel lands. When the upper-lower acceleration $A_z$ continuously satisfies a condition (second condition) of Th4 $\geq A_z \geq$ Th3 for a certain period while the filter reset determination unit 51 determines that the two-wheel vehicle is in the wheelie traveling, the filter reset determination unit 51 determines that the two-wheel vehicle returns from the wheelie traveling to a steady traveling state. At this time, the error estimation by the Kalman filter should be calculated (is calculated in the present embodiment).

More generally, the above determination can be applied to a special traveling state (such as, jumping, rear lift) other than the wheelie traveling. When the upper-lower acceleration $A_z$ satisfies the first condition within a predetermined period, the filter reset determination unit 51 determines that the vehicle is in the special traveling state in which at least one wheel is lifted. In addition, when the upper-lower acceleration $A_z$ continuously satisfies the second condition for a certain period while the filter reset determination unit 51 determines that the vehicle is in the special traveling state, the filter reset determination unit 51 determines that the vehicle is in the steady traveling state in which all the wheels are in contact with ground. Note, the thresholds Th1 to Th4 can be appropriately changed according to types of the special traveling state.

Note, Th3 and Th4 function as branch points for determining whether the vehicle is in the steady traveling state or the special traveling state, and can be steady determination thresholds shown in FIG. 5. Further, Th1 and Th2 function as branch points for determining whether the vehicle is in the special traveling state or an abnormal state (state deviating from the special traveling state), and can be abnormality determination thresholds shown in FIG. 5.

A special traveling determination section shown in FIG. 5 is a period from a time when the first condition is satisfied for the first time to an end time of the certain period in which the second condition is continuously satisfied. A normal traveling determination section shown in FIG. 5 is a period other than the special traveling determination section.

The filter reset determination unit 51 preferably determines that the vehicle is in the special traveling state during straight traveling. During turning, accuracy of the determination as to whether or not the vehicle is in the special traveling decreases, and when it is determined that the vehicle is not in the special traveling state, the accuracy of the error estimation by the Kalman filter may decrease. By limiting the determination of whether or not the vehicle is in the special traveling to the straight traveling, determination accuracy can be maintained at a certain level or higher, and the accuracy of the error estimation by the Kalman filter can be maintained at a certain level or higher.

[Calculation of Steering Angle]

The vehicle control device 100 can calculate the steering angle that influences the accuracy of the error estimation by the Kalman filter in the complementary filter calculation unit 52 using only the vehicle speed sensor 200 and the IMU 300. That is, the vehicle control device 100 can calculate the steering angle without using a steering angle sensor. By configuring a system in which the steering angle sensor is not mounted on the two-wheel vehicle, it is possible to reduce a calculation load caused by a weight change due to mounting of the sensor, and it is possible to facilitate mounting of the vehicle control device 100 in which types of sensors to be used are minimized. Note, the invention does not exclude use of the steering angle sensor or mounting the steering angle sensor on the two-wheel vehicle.

According to an automobile technical handbook, a steering angle $\delta_H$ can be calculated by the following Formula (2).

[Math. 2]

$$\delta_H = \mathrm{atan}\left(\frac{\tan \delta_w \cos \phi}{\cos \varepsilon + \tan \delta_w \sin \varepsilon \sin \phi}\right)$$

Formula (2)

Here, $\delta_w$ is a steering angle (see FIG. 4). $\varphi$ is a roll angle. $\varepsilon$ is a caster angle on the front wheel side. "atan" means "arctan" or "tan$^{-1}$". The previous value of the static roll angle can be used as the roll angle $\varphi$. Further, the two-wheel vehicle may include a roll angle sensor, and the roll angle $\varphi$ may be acquired from the roll angle sensor and used. The roll angle sensor can be, for example, a nine-axis IMU, but is not limited thereto.

According to FIG. 4, the steering angle $\delta_w$ can be calculated by the following Formula (3).

[Math. 3]

$$\delta_w = \mathrm{atan}\left(\frac{WB}{C} \tan D\right)$$

Formula (3)

According to Formulas (2) and (3), the steering angle $\delta_H$ can be expressed by geometrical information of the shape and posture of the two-wheel vehicle. The geometrical calculation unit 1 can calculate the steering angle $\delta_H$ by Formulas (2) and (3). In other words, the geometrical calculation unit 1 can calculate the traveling direction angle D of the two-wheel vehicle from the yaw angular speed of the gravitational direction axis and the wheel speed (vehicle speed V), and can calculate the steering angle $\delta_H$ using the traveling direction angle D and the roll angle $\varphi$. The calculated steering angle $\delta_H$ is input to the complementary filter calculation unit 52, and an item related to the error estimated by the Kalman filter can be adjusted by the steering angle $\delta_H$. By such adjustment, the error estimation unit 5 can correct the dynamic roll angle error using the steering angle $\delta_H$ of the two-wheel vehicle. In addition, the dynamic roll angle calculation unit 3 can calculate the dynamic roll angle $\varphi_d$ using the corrected dynamic roll angle error.

Here, since the geometrical calculation unit 1 calculates the traveling direction angle using the yaw angular speed measured from the IMU 300, it is preferable to calculate the traveling direction angle based on a height of the IMU 300 from a road surface. That is, when the height of the IMU 300 from the road surface is h, the steering angle $\delta_H$ may be calculated by replacing the turning radius R used for calculating the traveling direction angle D = sin$^{-1}$ (C/R) with R - h · sin$\varphi$. Accordingly, since the traveling direction angle D is calculated after eliminating a turning radius error in a height direction, calculation accuracy of the steering angle $\delta_H$ can be improved.

[Estimation of Riding Posture]

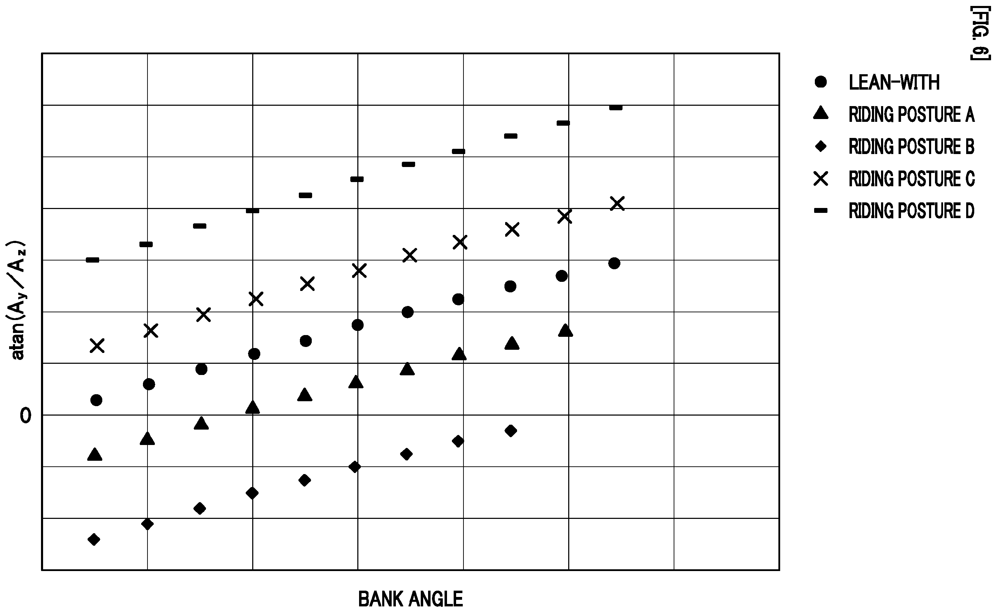

The vehicle control device 100 can estimate the riding posture that influences the static roll angle $\varphi_s$ using only the IMU 300. FIG. 6 is an explanatory diagram showing a riding posture map. As shown in the riding posture map 44 in FIG. 6, when five types of riding postures such as lean-with, a riding posture A in which lean-in is shallow, a riding posture B in which lean-in is deep, a riding posture C in which lean-out is shallow, and a riding posture D in which lean-out is deep are plotted on a graph in which the bank angle (the same as the roll angle $\varphi$) is taken on a horizontal axis and atan $(A_y/A_z)$ is taken on a vertical axis, the following Features 1 and 2 can be grasped.

Feature 1: A value of atan $(A_y/A_z)$ varies depending on the riding posture even at the same roll angle $\varphi$.

Feature 2: If the riding posture is constant, the value of atan $(A_y/A_z)$ is constant regardless of the roll angle $\varphi$. That is, with respect to any roll angle $\varphi$, a ratio of a change amount of the roll angle to a change amount of atan $(A_y/A_z)$ (an inclination of a primary straight line when the plot for each riding posture is fitted with the primary straight line) is substantially the same value as long as the same riding posture is maintained.

Based on Features 1 and 2, the value of atan $(A_y/A_z)$ during lean-with and the values of atan $(A_y/A_z)$ during a plurality of types of riding postures are calculated in advance and recorded in the riding posture map 44. In addition, the riding posture correction value calculation unit 4 refers to the riding posture map 44 and obtains the value of atan $(A_y/A_z)$ during lean-with corresponding to the current roll angle $\varphi$ (acquired from the output processing unit 6) during traveling. Further, the riding posture correction value calculation unit 4 acquires the current lateral acceleration $A_y$ and the current upper-lower acceleration $A_z$ from the IMU 300, and calculates the value of the current atan $(A_y/A_z)$ during traveling. Accordingly, since it is possible to calculate how far the calculated current value of atan $(A_y/A_z)$ is apart from the value of atan $(A_y/A_z)$ during lean-with (degree of deviation), the riding posture correction value calculation unit 4 can specify the riding posture.

More specifically, the value of atan $(A_y/A_z)$ during lean-with corresponds to the second posture angle $\varphi2$

estimated by the second posture angle acquisition unit 42 (see FIG. 3). The value of atan ($A_y/A_z$) acquired from the IMU 300 and calculated corresponds to the first posture angle $\varphi1$ estimated by the first posture angle estimation unit 41 (see FIG. 3). The degree of deviation between the value of atan ($A_y/A_z$) during lean-with and the calculated current value of atan ($A_y/A_z$) corresponds to the difference $\alpha$ calculated by the posture angle difference calculation unit 43 (see FIG. 3).

When the two-wheel vehicle is a moving vehicle including a vehicle and a load (including an occupant and packages) on the vehicle, the first posture angle estimation unit 41 can estimate the first posture angle $\varphi1$ of a center of gravity of the moving vehicle with respect to the vertical direction based on the lateral acceleration $A_y$ acting in the lateral direction of the moving vehicle and the upper-lower acceleration $A_z$ acting in the gravity direction of the moving vehicle. The second posture angle acquisition unit 42 acquires the second posture angle $\varphi2$ of the center of gravity of the vehicle (two-wheel vehicle) with respect to the vertical direction. The posture angle difference calculation unit 43 obtains the difference $\alpha$ between the first posture angle $\varphi1$ and the second posture angle $\varphi2$. The riding posture correction value calculation unit 4 outputs the difference $\alpha$ to the static roll angle calculation unit 2 as the riding posture correction value.

Therefore, the difference $\alpha$, which is the riding posture correction value for correcting the static roll angle $\varphi_s$, can be easily calculated based on the lateral acceleration $A_y$ and the upper-lower acceleration $A_z$. As a result, the static roll angle $\varphi_s$ can be easily corrected.

Here, when the upper-lower acceleration $A_z$ becomes extremely small due to the special traveling such as jumping, the value of atan ($A_y/A_z$) diverges, and thus the first posture angle $\varphi1$ may not be output. In order to avoid such a situation, when the upper-lower acceleration $A_z$ is equal to or less than a first predetermined value, the first posture angle estimation unit 41 preferably estimates the first posture angle $\varphi1$ using a value of the first predetermined value. By setting a lower limit value of the upper-lower acceleration $A_z$ in this manner, the first posture angle $\varphi1$ can be reliably output without being influenced by the jumping of the two-wheel vehicle.

In addition, when the upper-lower acceleration $A_z$ becomes extremely large due to the special traveling such as jumping, the value of atan ($A_y/A_z$) becomes extremely small, and there is a possibility that the difference $\alpha$ that does not match the current riding posture is output. In order to avoid such a situation, the posture angle difference calculation unit 43 preferably sets the difference $\alpha$ to a second predetermined value when the difference $\alpha$ between the first posture angle $\varphi1$ and the second posture angle $\varphi2$ is equal to or greater than the second predetermined value. By setting an upper limit value of the difference $\alpha$ in this manner, the first posture angle $\varphi1$ can be reliably output without being influenced by the jumping of the two-wheel vehicle.

Further, the second posture angle acquisition unit 42 preferably acquires the second posture angle $\varphi2$ from the riding posture map 44 created based on the roll angle $\varphi$ acting on the center of gravity of the vehicle (two-wheel vehicle), the lateral acceleration $A_y$ acting in the lateral direction of the vehicle, and the upper-lower acceleration $A_z$ acting in the gravity direction of the vehicle. By mapping the second posture angle $\varphi2$ in this manner, the difference $\alpha$ can be efficiently obtained.

[Summary]

According to the present embodiment, the calculation load of the roll angle $\varphi$ calculation can be reduced by estimating the dynamic roll angle error after calculating the static roll angle $\varphi_s$ and the dynamic roll angle $\varphi_d$. At this time, since the static roll angle $\varphi_s$ is corrected by calculating the riding posture correction value, the accuracy of the roll angle $\varphi$ calculation can be improved.

Further, since the dynamic roll angle $\varphi_d$ can be corrected in the traveling direction by calculating the roll angular speed of the traveling direction axis, the calculation accuracy of the dynamic roll angle $\varphi_d$ can be improved.

Further, by correcting the dynamic roll angle error using the steering angle $\delta_H$ of the vehicle, the calculation accuracy of the dynamic roll angle $\varphi_d$ can be improved.

In addition, since the error estimation of the dynamic roll angle $\varphi_d$ is performed when it is determined that the traveling is not the special traveling and the error estimation of the dynamic roll angle $\varphi_d$ is not performed when it is determined that the traveling is the special traveling, the influence during special traveling can be reduced.

Further, according to the present embodiment, since the special traveling state and the steady traveling state can be determined based on the upper-lower acceleration $A_z$, a simple configuration for determining the special traveling state only by the values of the sensor of the IMU 300 can be realized.

Further, the determination accuracy can be improved by determining the special traveling state during straight traveling.

In addition, by setting a plurality of types of thresholds to perform the determination of the special traveling state and the steady traveling state, it is possible to improve the accuracy of determining whether or not the special traveling state is started, and it is also possible to improve the accuracy of determining whether or not the special traveling state is ended.

Further, according to the present embodiment, since the steering angle $\delta_H$ is calculated using the traveling direction angle D and the roll angle $\varphi$, control for calculating the steering angle $\delta_H$ can be realized only with the values of the sensor of IMU 300 without the steering angle sensor.

Further, since the traveling direction angle D is calculated based on the height of the IMU 300 from the road surface, the error of the turning radius R due to a difference in the height direction can be removed, and calculation accuracy of the traveling direction angle D can be improved.

Further, according to the present embodiment, the difference $\alpha$, which is the riding posture correction value for correcting the static roll angle $\varphi_s$, can be easily calculated based on the lateral acceleration $A_y$ and the upper-lower acceleration $A_z$. As a result, the static roll angle $\varphi_s$ can be easily corrected.

Further, by setting the lower limit value (first predetermined value) of the upper-lower acceleration $A_z$, the first posture angle $\varphi 1$ can be reliably output without being influenced when the two-wheel vehicle is jumping.

Further, by setting the upper limit value (second predetermined value) of the difference $\alpha$, the first posture angle $\varphi 1$ can be reliably output without being influenced when the two-wheel vehicle is jumping.

Further, by mapping the second posture angle $\varphi 2$, the difference $\alpha$ can be efficiently obtained.

[Invention of Method]

A first invention of the method is roll angle calculation method that calculates a roll angle of a vehicle. The roll angle calculation method includes: calculating a provisional first roll angle using a yaw angular speed of a gravitational direction axis and a wheel speed calculated from previous values of a yaw angular speed, a pitch angular speed, and a physical quantity related to the roll angle measured by an inertial measurement unit; calculating a riding posture correction value based on a difference between a first posture angle obtained based on a center of gravity generated by a riding posture and a second posture angle obtained based on a center of gravity of the vehicle, the first posture angle being an angle obtained from a lateral acceleration acting in a lateral direction of the vehicle and an upper-lower acceleration acting in a gravity direction of the vehicle; calculating a confirmed first roll angle by correcting the provisional first roll angle with the riding posture correction value; and estimating a second roll angle error based on a difference between the confirmed first roll angle and a second roll angle different from the confirmed first roll angle.

Further, in the roll angle calculation method according to the first invention of the method, a traveling direction angle of the vehicle is calculated from the yaw angular speed of the gravitational direction axis and the wheel speed, a roll angular speed of a traveling direction axis is calculated based on the roll angular speed measured by the inertial measurement unit and the traveling direction angle, and the second roll angle is calculated using the roll angular speed of the traveling direction axis and the second roll angle error.

A second invention of the method is a traveling state determination method for determining a traveling state of the vehicle. The traveling state determination method includes: determining, when the upper-lower acceleration of the vehicle satisfies a first condition, that the vehicle is in a special traveling state in which at least one wheel is lifted; and determining, when the upper-lower acceleration continuously satisfies a second condition for a certain period while it is determined that the vehicle is in the special traveling state, that the vehicle is in a steady traveling state in which all the wheels are in contact with ground.

A third invention of the method is a steering angle calculation method. The steering angle calculation method includes: calculating the traveling direction angle of the vehicle from the yaw angular speed of the gravitational direction axis and the wheel speed; and calculating a steering angle using the traveling direction angle and the roll angle.

A fourth invention of the method is a method for estimating a riding posture correction value for the vehicle used for estimating the roll angle of the vehicle. The method includes: estimating a first posture angle with respect to the vertical direction of a center of gravity of a moving vehicle including the vehicle and a load of the vehicle based on a lateral acceleration acting in the lateral direction of the moving vehicle and an upper-lower acceleration acting in the gravity direction of the moving vehicle; acquiring a second posture angle with respect to the vertical direction of the center of gravity of the vehicle; obtaining a difference between the first posture angle and the second posture angle; and setting the difference as the riding posture correction value.

[Modifications]

(a): In the present embodiment, the error estimation unit 5 (complementary filter calculation unit 52) calculates the dynamic roll angle error, and the dynamic roll angle calculation unit 3 performs feedback correction on the dynamic roll angle $\varphi_d$. However, since the error estimation unit 5 (complementary filter calculation unit 52) can also estimate the error of the static roll angle $\varphi_s$ by the Kalman filter, the static roll angle error may be calculated, and the static roll angle calculation unit 2 may perform feedback correction on the static roll angle $\varphi_s$.

(b): In the present embodiment, the steering angle $\delta_H$ is input to the error estimation unit 5, and the error estimation by the Kalman filter is adjusted. However, for example, when large steering occurs, that is, when the steering angle $\delta_H$ is

equal to or greater than a predetermined value, since it is expected that the accuracy of the error estimation by the Kalman filter is significantly reduced, the error estimation may not be performed to begin with.

(c): In the present embodiment, the static roll angle $\varphi_s$ and the dynamic roll angle $\varphi_d$ are input to the filter reset determination unit 51, and the roll angle difference is calculated and output to the complementary filter calculation unit 52. However, the static roll angle $\varphi_s$ and the dynamic roll angle $\varphi_d$ may be input to the complementary filter calculation unit 52, and the complementary filter calculation unit 52 may calculate the roll angle difference to perform the error estimation by the Kalman filter. Further, the complementary filter calculation unit 52 may perform the error estimation for each of the static roll angle $\varphi_s$ and the dynamic roll angle $\varphi_d$ without calculating the roll angle difference.

(d) : A technique in which various techniques described in the present embodiment are appropriately combined can also be realized.

(e) The software described in the present embodiment can be achieved as hardware, and the hardware can be achieved as software.

(f): Other hardware, software, flowcharts, and the like can be appropriately changed without departing from the gist of the invention.

Reference Signs List

100: vehicle control device
200: vehicle speed sensor
300: IMU (inertial measurement unit)
1: geometrical calculation unit
2: static roll angle calculation unit (first roll angle calculation unit)
3: dynamic roll angle calculation unit (second roll angle calculation unit)
4: riding posture correction value calculation unit (posture angle calculation unit)
41: first posture angle estimation unit
42: second posture angle acquisition unit
43: posture angle difference calculation unit
44: riding posture map
5: error estimation unit (roll angle error estimation unit)
51: filter reset determination unit (special traveling determination unit, traveling determination unit)
52: complementary filter calculation unit (roll angle error estimation unit)
6: output processing unit

**Claims**

1. A vehicle control device comprising:
   a geometrical calculation unit configured to calculate a traveling direction angle of a vehicle from a yaw angular speed of a gravity direction axis and a wheel speed, and calculate a steering angle using the traveling direction angle and a roll angle.

2. The vehicle control device according to claim 1, further comprising:

   an inertial measurement unit configured to measure the yaw angular speed, wherein
   the geometrical calculation unit calculates the traveling direction angle based on a height of the inertial measurement unit from a road surface.

3. A steering angle calculation method comprising:

   calculating a traveling direction angle of a vehicle from a yaw angular speed of a gravity direction axis and a wheel speed; and
   calculating a steering angle using the traveling direction angle and a roll angle.

[FIG. 1]

[FIG. 2]

YAW ANGULAR SPEED OF
GRAVITATIONAL DIRECTION AXIS

YAW ANGULAR SPEED $\omega_y$ OF SENSOR AXIS

M

R

[FIG. 3]

[FIG. 4]

[FIG. 5]

EP 4 755 776 A1

CHANGE IN UPPER-LOWER ACCELERATION DURING WHEELIE TRAVELING

| NORMAL TRAVELING DETERMINATION SECTION | SPECIAL TRAVELING DETERMINATION SECTION | NORMAL TRAVELING DETERMINATION SECTION |
|---|---|---|

CERTAIN PERIOD OF TIME

UPPER-LOWER ACCELERATION $A_z$

Th1
Th3
Th4
Th2

STEADY DETERMINATION THRESHOLD

ABNORMALITY DETERMINATION THRESHOLD

time

SHOULD BE CALCULATED | MAY NOT BE CALCULATED | SHOULD BE CALCULATED

[FIG. 6]

- ● LEAN-WITH
- ▲ RIDING POSTURE A
- ◆ RIDING POSTURE B
- ✕ RIDING POSTURE C
- ▬ RIDING POSTURE D

$\mathrm{atan}(A_y / A_z)$

BANK ANGLE

EP 4 755 776 A1

# EP 4 755 776 A1

## INTERNATIONAL SEARCH REPORT

International application No.

**PCT/JP2024/026966**

### A. CLASSIFICATION OF SUBJECT MATTER

***B62K 21/00***(2006.01)i; ***B62J 45/00***(2020.01)i; ***B62J 45/414***(2020.01)i; ***B62J 45/415***(2020.01)i; ***B62K 17/00***(2006.01)i
FI: B62K21/00; B62J45/00; B62J45/414; B62J45/415; B62K17/00

According to International Patent Classification (IPC) or to both national classification and IPC

### B. FIELDS SEARCHED

Minimum documentation searched (classification system followed by classification symbols)

B62K21/00; B62J45/00; B62J45/414; B62J45/415; B62K17/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | US 10442463 B2 (ROBERT BOSCH GMBH) 15 October 2019 (2019-10-15)<br>column 2, line 60 - column 4, line 47, drawings | 1-3 |
| A | WO 2015/163426 A1 (KYB CORPORATION) 29 October 2015 (2015-10-29)<br>paragraphs [0032]-[0052] | 1-3 |
| A | WO 2018/179189 A1 (MITSUBISHI HEAVY IND MACH SYSTEMS LTD.) 04 October<br>2018 (2018-10-04)<br>entire text, all drawings | 1-3 |

☐ Further documents are listed in the continuation of Box C.     ☑ See patent family annex.

---

\*    Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **04 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

18

## INTERNATIONAL SEARCH REPORT
### Information on patent family members

International application No.

**PCT/JP2024/026966**

| Patent document cited in search report | | | Publication date (day/month/year) | Patent family member(s) | | | Publication date (day/month/year) |
|---|---|---|---|---|---|---|---|
| US | 10442463 | B2 | 15 October 2019 | DE | 102016202466 | A1 | |
| WO | 2015/163426 | A1 | 29 October 2015 | US | 2017/0096040 | A1 | |
| | | | | paragraphs [0040]-[0060] | | | |
| | | | | EP | 3109143 | A1 | |
| | | | | CN | 106103258 | A | |
| WO | 2018/179189 | A1 | 04 October 2018 | US | 2020/0025794 | A1 | |
| | | | | GB | 2574968 | A | |
| | | | | KR | 10-2019-0116500 | A | |
| | | | | SG | 11201908357R | A | |

Form PCT/ISA/210 (patent family annex) (July 2022)

**EP 4 755 776 A1**

**Patent documents cited in the description**

- JP 2022112301 A